Europäisches Patentamt

European Patent Office

Office européen des brevets

(11) Numéro de publication: **0 228 584**
**B1**

# (12) FASCICULE DE BREVET EUROPEEN

(45) Date de publication du fascicule du brevet: **28.11.90**

(51) Int. Cl.⁵: **H 02 H 9/02**

(21) Numéro de dépôt: **86116699.9**

(22) Date de dépôt: **02.12.86**

(54) Limiteur de courant alternatif.

(30) Priorité: **05.12.85 FR 8518026**

(43) Date de publication de la demande:
**15.07.87 Bulletin 87/29**

(45) Mention de la délivrance du brevet:
**28.11.90 Bulletin 90/48**

(84) Etats contractants désignés:
**AT BE CH DE ES FR GB GR IT LI LU NL SE**

(56) Documents cités:
**DE-C- 382 058**
**FR-A-1 494 738**
**FR-A-1 520 953**
**FR-A-2 094 354**
**US-A-3 144 628**
**US-A-3 703 664**

**ELEKTRIE, vol. 31, no. 11, novembre 1977, pages 606-610; H. GERLACH et al.: "Supraleitende Kurzschliesser und Strombegrenzungseinrichtungen"**

(73) Titulaire: **GEC ALSTHOM SA
38, avenue Kléber
F-75116 Paris (FR)**

(72) Inventeur: **Bekhaled, Mohammed
6 rue de Prague
F-90000 Belfort (FR)**

(74) Mandataire: **Weinmiller, Jürgen et al
Lennéstrasse 9 Postfach 24
D-8133 Feldafing (DE)**

(56) Documents cités:
**JOURNAL OF PHYSICS, D: APPL: PHYSICS, vol. 7, no. 4, 1974, pages 491-499, GB; R.V. HARROWELL: "A new superconducting switch"**

Courier Press, Leamington Spa, England.

## Description

La présente invention concerne un limiteur de courant alternatif pour ligne de transport d'énergie avec organe de coupure en cas de surintensité, comprenant un transformateur dont le primaire est en série entre les circuits d'alimentation et d'utilisation, et comportant un ou plusieurs secondaires en court-circuit sur eux-mêmes, la réactance de fuite du transformateur vue du primaire, étant faible, et la résistance à l'état normal du ou des secondaires, vue du primaire, étant très supérieure à l'impédance nominale du transformateur.

Un tel dispositif est décrit dans le brevet US—A—3 703 664. Il est cependant très difficile de satisfaire aux deux conditions concernant la résistance à l'état normal et la capacité calorifique (ou enthalpie) du ou des secondaires de tels limiteurs dans le cas de lignes transportant de fortes puissances. On n'admet en effet généralement qu'un échauffement au plus égal à 100°K lors de l'intervention des organes de coupure, en général après 3 ou 4 périodes du réseau; les dilatations de la matière supraconductrice et de la matrice en métal conducteur normal restent alors encore très faibles.

La présente invention a pour but de procurer des limiteurs de courant alternatif pour lignes transportant de fortes puissances, dont la résistance à l'état normal des secondaires vue du primaire soit très supérieure à l'impédance nominale du transformateur, et dont la capacité calorifique (ou enthalpie) de ces secondaires soit suffisamment élevée pour limiter leurs dilatations en cas de court-circuit au moment de la coupure à des valeurs admissibles.

Le limiteur selon l'invention est caractérisé en ce que le ou les secondaires du transformateur sont en materiau supraconducteur contenus dans une enceinte cryogénique et comprennent chacun un enroulement actif et un enroulement auxiliaire constitué d'un nombre pair de bobines en série enroulées alternativement dans un sens et dans le sens opposé, le nombre total des spires enroulées dans un sens étant égale à celui des spires enroulées dans l'autre, et de capacité calorifique suffisamment élevée pour limiter leur dilatation à des valeurs encore faibles au moment de l'intervention de l'organe de coupure.

Il est décrit ci-après, à titre d'exemple et en référence aux figures du dessin annexé, un dispositif limiteur de courant alternatif selon l'invention.

La figure 1 représente schématiquement un tel dispositif limiteur sur un circuit monophasé.

La figure 2 représente un schéma équivalent après transition du secondaire du transformateur à l'état normal à la suite d'un court-circuit en aval du dispositif limiteur.

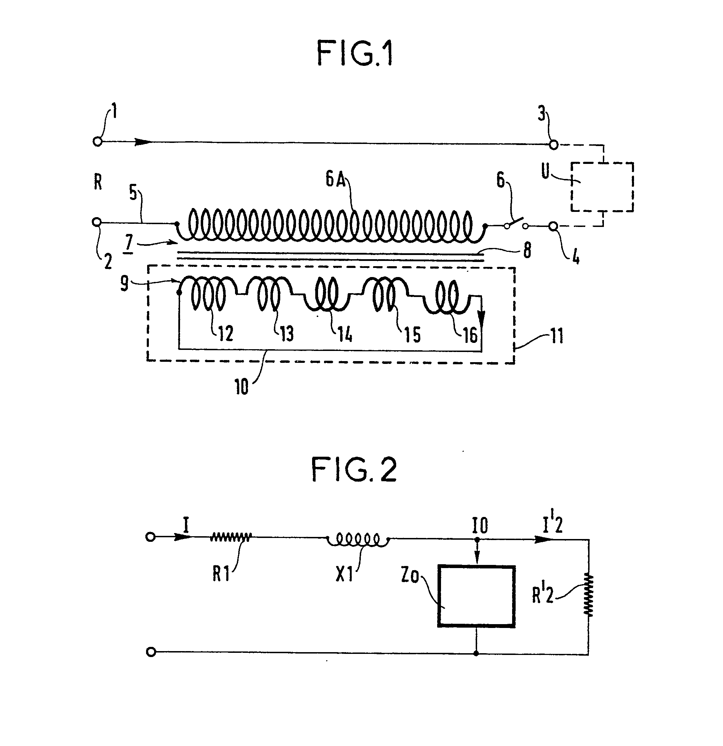

Dans la figure 1, 1 et 2 désignent les bornes d'un réseau d'alimentation R, ou d'un alternateur, et 3 et 4 les bornes du réseau d'utilisation U. Sur le conducteur 5, soit en cuivre à la température ordinaire, soit supraconducteur, est intercalé en amont d'un organe de coupure 6 le primaire 6A d'un transformateur 7 à circuit magnétique 8 et secondaire 9. Ce secondaire est en court-circuit sur lui-même (conducteur 10) dans une enceinte cryogénique 11 maintenue à 4°K, par exemple par un bain d'hélium liquide.

L'enroulement secondaire du transformateur comprend un premier enroulement 12, que l'on peut appeler "actif", destiné à compenser les ampères-tours de l'enroulement primaire, et un enroulement auxiliaire constitué d'un nombre pair de bobines identiques montées en série les unes avec les autres et avec l'enroulement actif, et bobinées alternativement dans un sens et dans l'autre (ici quatre bobines 13, 14, 15, 16). La fonction des bobines de l'enroulement auxiliaire est d'augmenter la résistance et la capacité calorifique (ou enthalpie) du secondaire au moment de la transition du supraconducteur vers l'état normal, mais sans jouer un rôle actif vis-à-vis du primaire.

En cas de court-circuit ou d'un autre incident dans la ligne comprenant le conducteur 5, faisant apparaître une surintensité, lorsque le courant de ligne devient supérieur à un seuil Imax fixé à l'avance, le secondaire supraconducteur repasse à l'état normal et l'impédance du transformateur vue du primaire devient voisine de son impédance à vide, qui est très grande vis-à-vis de l'impédance nominale. Après un transitoire plus ou moins long, le courant de ligne tend vers le courant à vide du transformateur.

Le circuit magnétique doit être calculé pour que l'appel de courant magnétisant à l'enclenchement avec secondaire ouvert soit inférieur à la valeur maximale choisie pour l'intensité dans la ligne. La réactance de fuite doit être la plus faible possible.

Dans le schéma équivalent de la figure 2, correspondant à un secondaire ayant transité vers l'état normal après un court-circuit sur la ligne en aval du primaire du transformateur, I désigne l'intensité dans le primaire, $R_1$ sa résistance (négligeable), $X_1$ la réactance totale de fuite ramenée au primaire (négligeable), $Z_0$ l'impédance à vide du transformateur, $I_0$ l'intensité correspondante, $R'_2$ la résistance du secondaire ramenée au primaire (après la transition vers l'état normal) et $I'_2$ l'intensité correspondante.

Le limiteur doit répondre à deux conditions essentielles.

En premier lieu, le courant I dans le primaire ne doit pas dépasser le seuil Imax fixé. Cette condition se traduit par une résistance secondaire ramanée au primaire $R'_2$ élevée. $R'_2$ doit être très supérieure à l'impédance nominale $Z_n$ du transformateur.

En outre, l'enroulement secondaire doit présenter une bonne tenue à l'échauffement pendant l'intervalle de temps $\Delta t_1$ qui s'écoule avant que n'intervienne l'organe de protection de la ligne 6. Ceci implique que l'enroulement supraconducteur présente une capacité calorifique (ou enthalpie) suffisante pour limiter les dilatations pendant l'intervalle $\Delta t_1$. On admet généralement que l'échauffement de l'enroulement ne doit pas avoir dépassé 100°K au moment de l'intervention de l'organe de coupure de la ligne ($\Delta t_1$ correspondant à 3 à 4 périodes du réseau), car pour une température d'environ 100°K les différents coefficients de dilatation de la matière supraconductrice et de la matrice en conducteur normal sont encore très faibles.

Or pour un enroulement seocndaire comprenant une seule couche bobinée et qui servirait uniquement à annuler les ampères-tours du primaire, ce secondaire possèderait à l'état supraconducteur une résistance $R'_2$ nulle et une réactance de fuite ramenée au primaire très faible $X_1$. Après transition vers l'état normal, sa résistance prendrait la valeur $R'_2 = R'_{21}$, son enthalpie étant $H_1$. Il subirait l'échauffement $\Delta T_1$ pendant l'intervalle $\Delta t_1$ précédant l'intervention des organes de coupure.

Dans le cas d'un secondaire tel que décrit en référence à la figure 1, comprenant en plus en nombre pair de couches bobinées alternativement dans des sens opposés et en série, soit 2n couches, la résistance à l'état supraconducteur $R'_2$ est toujours nulle et la réactance de fuite X ramenée au primaire un peu supérieure à celle d'un secondaire à une seule couche, mais encore très faible. Après transition vers l'état normal, en admettant que les bobinages 13, 14, 15, 16 possèdent le même nombre de spires que le bobinage 12, la résistance devient $R'_2 = (2n+1) R'_{21}$ et l'enthalpie $H = (2n+1) H_1$.

De ce fait, l'échauffement prend la valeur

$$\Delta T_2 = \frac{\Delta T_1}{(2n+1)^2}$$

Il est donc notablement plus faible que dans le premier cas. L'enroulement supraconducteur s'échauffe moins et ne subit pas de dilatation importante avant l'intervention des organes de coupure de la ligne.

**Revendication**

Limiteur de courant alternatif pour ligne de transport d'énergie à organe de coupure (6) en cas de surintensité, comprenant un transformateur (7) dont le primaire (6A) est en série entre des circuits d'alimentation (R) et d'utilisation (U), et comportant un ou plusieurs secondaires (9) en court-circuit sur eux-mêmes, la réactance de fuite du transformateur, vue du primaire, étant faible, et la résistance à l'état normal du ou des secondaires, vue du primaire, étant très supérieure à l'impédance nomimale du transformateur, caractérisé en ce que le ou les secondaires du transformateur sont en materiau supraconducteur contenus dans une enceinte cryogénique (11) et comprennent chacun un enroulement actif (12) et un enroulement auxiliaire constitué d'un nombre pair de bobines en série (13, 14, 15, 16) enroulées alternativement dans un sens et dans le sens opposé, le nombre total des spires enroulées dans un sens étant égal à celui des spires enroulées dans l'autre, et de capacité calorifique suffisamment élevée pour limiter leur dilatation à des valeurs encore faibles au moment de l'intervention de l'organe de coupure.

**Patentanspruch**

Wechselstrombegrenzer für eine Starkstromleitung, die ein Überstromtrennorgan (6) besitzt, mit einem Transformator (7), dessen Primärwicklung (6A) in Reihe zwischen Speisekreis (R) und Verbrauchskreis (U) geschaltet ist, und der eine oder mehrere in sich kurzgeschlossene Sekundärwicklungen (9) aufweist, wobei die Streureaktanz des Transformators, von der Primärseite her gesehen, schwach, und der Widerstand der Sekundärwicklung bzw. -wicklungen im Normalzustand, von der Primärseite her gesehen, wesentlich größer als der Nennimpedanzwert des Transformators ist, dadurch gekennzeichnet, daß die Sekundärwicklung bzw. -wicklungen des Transformators aus supraleitendem Material bestehen und in einer Tiefsttemperaturumhüllung (11) liegen und jeweils eine aktive Wicklung (12) und eine Hilfswicklung aus einer geradzahligen Anzahl von in Reihe geschalteten Spulen (13, 14, 15, 16) aufweisen, die abwechselnd im entgegengesetzten Sinn gewickelt sind, wobei die Gesamtzahl der im einen Sinn gewickelten Windungen derjenigen der im anderen Sinn gewickelten Windungen entspricht, und daß sie eine Wärmekapazität aufweisen, die groß genug ist, um ihre Ausdehnung auf Werte zu begrenzen, die im Augenblick des Eingreifens des Trennorgans noch klein sind.

**Claim**

An alternating current limiter for a power transport line, including a member (6) for interrupting the line in the event of an overload current, and a transformer (7) whose primary winding (6A) is connected in series between the power supply (R) and the load (U) circuits, and comprising one or more secondary windings (9) connected in a short-circuit on themselves, the leakage reactance of the transformer as seen from the primary side being low, and the resistance in the normal state of the secondary winding(s) as seen from the primary side being very much greater than the nominal impedance of the transformer, characterized in that the or each secondary winding of the transformer is made of superconducting material contained in a cryogenic enclosure (11) and comprises each an active winding (12) and an auxiliary winding, constituted by an even number of series-connected auxiliary coils (13, 14, 15, 16) wound alternatingly in opposite directions, with the total number of turns wound in one direction being equal to the total number of turns wound in the opposite direction, and with the thermal capacity being sufficiently high to limit their expansion to values which are still small at the moment of intervention of the circuit breaker.

# FIG.1

# FIG.2